# EUROPEAN PATENT SPECIFICATION

(11) **EP 3 311 953 B1**
(45) Date of publication and mention of the grant of the patent: **02.03.2022**
(21) Application number: 17191183.7
(22) Date of filing: 14.09.2017
(51) Int. Cl.: B23Q 11/10, B23Q 17/09

(54) **FEEDBACK-CONTROLLED SYSTEM FOR CRYOGENICALLY COOLING MACHINING TOOLS**
RÜCKKOPPLUNGSGESTEUERTES SYSTEM ZUR KRYOGENEN KÜHLUNG VON WERKZEUGMASCHINEN
SYSTÈME DE REFROIDISSEMENT CRYOGÉNIQUE D'OUTILS D'USINAGE CONTRÔLÉ PAR RÉTRO-ACTION

(30) Priority: 18.10.2016 US 201615296609
(43) Date of publication of application: 25.04.2018
(73) Proprietor: Raytheon Technologies Corporation, Farmington, CT 06032 (US)
(72) Inventor: LEVASSEUR, Glenn, Colchester, CT Connecticut 06415 (US); REED, Gordon Miller, Plantsville, CT Connecticut 06479 (US); BARNAT, Krzysztof, Berlin, CT Connecticut 06037 (US)
(74) Representative: Dehns

(56) References cited:
- EP-A1- 2 347 855
- EP-A1- 2 353 779
- EP-A2- 2 572 825
- WO-A1-02/096598
- WO-A1-2009/032709
- WO-A1-2015/044124
- DE-U1-202013 007 344

## Description

### BACKGROUND

Machining techniques take a raw material, called a work piece, and form it into a final, desired shape through a controlled material-removal process. Modern machining processes use a variety of cutting tools to shape work pieces, including drills, turning inserts, endmills, taps, threadmills, and others. These various tools can be used for machining such as turning, milling, hole making, cutting and other shaping processes.

As cutting tools are used in machining processes, they are worn down. Over time, the application of cutting tools to work pieces dulls the tools. This is caused in part by the heat and friction created where the tool meets the work piece. Thus, cutting tools are often cooled to increase tool longevity.

One such method of cooling cutting tools is cryogenic cooling. These methods utilize cryogenic coolants, such as liquid nitrogen or carbon dioxide, to cool the tool. Standard apparatuses for cryogenic cooling are commercially available. Some cryogenic machining systems run a coolant through the cutting tool. In contrast, other machining technology provides an external cooling scheme that applies coolant to the surface of the cutting tool. Both types of commercially available systems cool a tool used in machining methods.

These methods offer no way to monitor how efficiently the cutting tool is being cooled by the cryogenic coolant. Neither do these methods provide any information on whether a cutting tool has dulled too much to be used, nor do these methods provide information on the state of the cryogenic fluid used in the process. Generally, these methods allow the cutting tool to be used until it no longer works, and allow users to only assess the cutting tool's condition in a qualitative, trial and error method. This causes error in work pieces when the cutting tool has deteriorated, and does not efficiently use cryogenic coolants.

WO02/096598A1 discloses an apparatus and method for machining with cryogenically cooled oxide containing ceramic cutting tools, wherein a cryogenic fluid source, a flow regulator and a sensor are used. WO2009/032709A1 discloses an apparatus and method for controlling the temperature of a cryogen. WO2015/044124A1 discloses an optical sensor arrangement for monitoring cryogenic fluid. EP2347855A1 discloses a system and method for delivery of liquid cryogenic fluid to machining tools. EP2353779A1 discloses a cutting tool holder arrangement. EP2572825A2 discloses strengthening by machining. DE 20 2013 007 344 U1 discloses thermal control of a cutting machine tool.

### SUMMARY

According to a first aspect of the present invention, there is provided a cryogenic machining system as set forth in claim 1.

According to a further aspect of the present invention, there is provided a method as set forth in claim 8.

Details of embodiments of the invention are set forth in the dependent claims.

### BRIEF DESCRIPTION OF THE DRAWINGS

FIG. 1 is a schematic diagram of a feedback-controlled cryogenic machining system.
FIG. 2 is a flow diagram of a method of executing a feedback-controlled cryogenic machining system.

### DETAILED DESCRIPTION

The disclosed system allows for a quantitative analysis of the state of a cutting tool and the cryogenic coolant flowing to a cutting tool. A feedback-controlled system provides data and information on the cutting tool and the cryogenic coolant not previously collected in machining systems. This information allows for modification of the cryogenic cooling machining system to create longer tool life, improved workpiece metallurgy and surface finish, and more efficient use of cryogenic coolants.

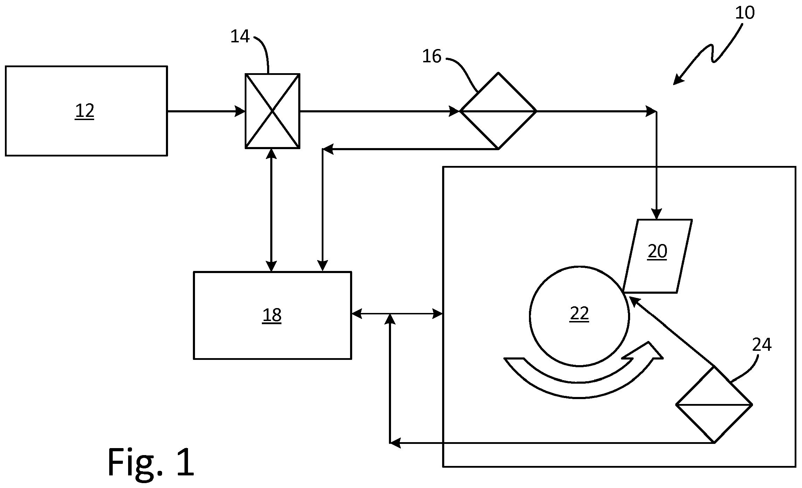

FIG. 1 is a schematic diagram of feedback-controlled cryogenic machining system 10. System 10 includes pressurized cryogenic fluid source 12, flow regulator 14, sensor 16, machining control unit (MCU) 18, cutting tool 20, work piece 22, and infrared (IR) sensor 24. Cryogenic fluid source 12 is connected to flow regulator 14 via piping or tubing. Sensor 16 is attached to piping or tubing downstream of flow regulator 14, and cutting tool 20 is downstream of sensor 16. Cutting tool 20 machines work piece 22. IR sensor 24 is aimed at the intersection of cutting tool 20 and work piece 22. MCU 18 communicates with sensor 16 and IR sensor 24, and can control flow regulator 14, cutting tool 20, and work piece 22.

In machining system 10, cutting tool 20 is cooled by a cryogenic fluid from cryogenic fluid source 12. Cryogenic coolants are typically liquefied gases, such as liquid nitrogen, hydrogen, or carbon dioxide. Liquid nitrogen is particularly useful for machining purposes as it can be used to chill a cutting tool without any environmental run off. Cryogenic fluid source 12 is a pressurized container holding a cryogenic fluid, such as liquid nitrogen, liquid carbon dioxide, or other cryogenic fluid used for cooling. Cryogenic fluid source 12 can be a Dewar flask or tank appropriate for holding a cryogenic coolant.

Cryogenic fluid source 12 is connected to flow regulator 14, which controls the flow of cryogenic fluid from cryogenic fluid source 12 and into the system. Flow regulator 14 can be, for instance, a valve system or a variable speed pump. Flow regulator 14 can be a hand set regulator, or automatically set by feedback control. Ideally, flow regulator 14 allows enough cryogenic fluid into the system to effectively cool cutting tool 20, but does not waste cryogenic fluid.

Downstream of flow regulator 14 are sensor 16. Sensor 16 can be one or more sensors configured to detect temperature, pressure, or flow rate of a cryogenic fluid that has flowed through flow regulator 14. Sensor 16 can be commercially available sensors, and can be in-line with the flow of cryogenic fluid. Sensor 16 should not obstruct flow of the cryogenic fluid. For instance, sensor 16 can clamp over tubing through which the cryogenic fluid flows.

Sensor 16 should be capable of detecting whether the cryogenic fluids' attributes fall outside of an optimal range for the cryogenic fluid. A pressure sensor can be configured to detect cryogenic fluid pressure and used to determine cryogenic feed line pulsations. A flow sensor can be configured to detect the flow rate of the cryogenic fluid and used to determine feed line pulsations. This information can help determine the optimal feed rate and properties of cryogenic fluid to cutting tool 20.

Cutting tool 20 is downstream of sensor 16. Cutting tool 20 can be a drill, turning insert, tap, broach cutter, abrasive tool, endmill, or threadmill. Cutting tool 20 can be used to drill, press, cut or otherwise shape work piece 22. A coolant, such as liquid nitrogen, can be applied to cutting tool 20 through two methods: internally, through the inside of cutting tool 20, or externally, through a nozzle to cutting tool 20. Depending on the needs of the specific system, a cryogenic fluid cooling cutting tool 20 can flash into a gas as it hits cutting tool 20, as it enters cutting tool 20, or as it exits cutting tool 20.

Machining system 10 can be used to change work piece 22 (a raw material, such as titanium alloys) into a desired shape. This is accomplished by a controlled material removal process altering work piece 22 with cutting tool 20. Instructions can be programmed through a user interface (not pictured) to direct the movement and action of cutting tool 20, and the placement and orientation of work piece 22.

Cutting tool 20 works on a surface of work piece 22 to shape work piece 22. Infrared (IR) sensor 24 monitors the surface of work piece 22 and the end of cutting tool 20. IR sensor 24 is in close proximity to where cutting tool 20 is working on work piece 22. IR sensor 24 optically monitors this area (sometimes referred to as the "cut zone"), including cutting tool 20 and the surface of work piece 22, detecting temperature variations. Temperature variations detected at the cut zone can show the state of cutting tool 20 and work piece 22. If temperature variations are outside of an optimal range, the work of cutting tool 20 can be altered by changing position or the process parameters of cutting tool 20. Additionally, IR sensor 24 can be used to detect heat released from cutting tool 20 as it works on work piece 22. Data collected by IR sensor 24 is sent to Machining control unit 18.

Machining control unit (MCU) 18 receives data from sensor 16 and IR sensor 24. MCU 18 can be an add-on to a larger machining control unit, which can be a computer numerical control or a more complex program designed to control the machining process as a whole. MCU 18 analyzes data, such as temperature, pressure, or flow rate data, from sensor 16. The control of temperature, pressure, and flow rate of the cryogenic fluid via flow regulator 14 prevents the cryogenic fluid from flashing to a gas before it cools cutting tool 20.

MCU 18 can be programmed so each measured property has an ideal range, and MCU 18 can adjust flow regulator 14 as required based on the incoming data. These adjustments allow for an efficient use of cryogenic fluid to cool cutting tool 20, but do not allow waste of cryogenic fluid. These adjustments can be made by MCU 18 automatically, or MCU 18 can notify a user of system 10 that adjustments need to be made.

MCU 18 can also analyze data provided by IR sensor 24 about cutting tool 20 and work piece 22, allowing for quantitative information on the state of cutting tool 20, including temperature change on the surface of work piece 22 being cut by cutting tool 20. This creates an environment where the user of machining system 10 is notified before cutting tool 20 is dulled, and increasing overall efficiency of the system.

Overall, feedback-controlled cryogenic machining system 10 uses inline sensor 16 to analyze the cryogenic fluid being delivered to cutting tool 20, set bounds for ideal temperature, pressure, and flow of the cryogenic fluid, and uses and IR sensor 24 to analyze temperature changes on the surface of work piece 22 and cutting tool 20. This information allows immediate adjustments by MCU 18 to the system, while machining is taking place, to optimize both the cryogenic cooling and the cutting of the work piece.

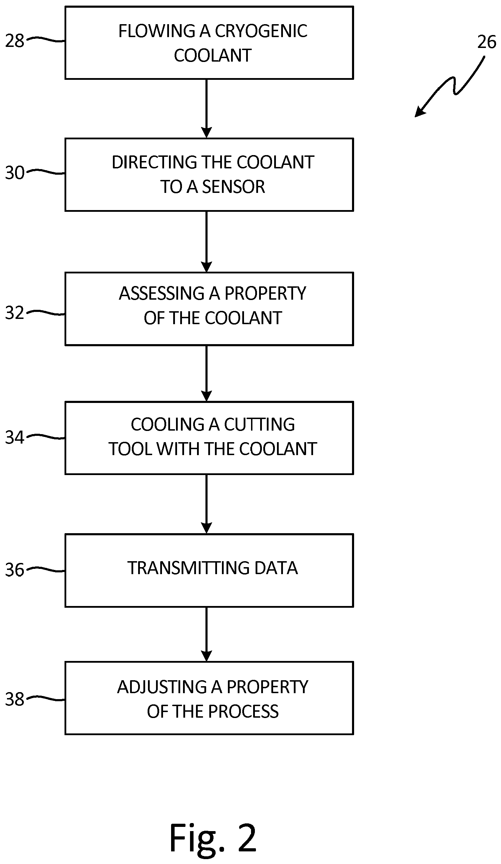

FIG. 2 is a flow diagram of method 26 of using a feedback-controlled cryogenic machining system. Method 26 begins with step 28, where a cryogenic fluid, such as liquid nitrogen, is flowed into the system from a cryogenic fluid source through a flow regulator. The source can be a Dewar flask or tank suitable for storing cryogenic fluid. The flow regulator can be a valve system or variable speed pump that controls flow of cryogenic fluid out of the source.

In step 30, the cryogenic fluid is flowed through one or more in line sensors. In step 32, the sensors assess temperature, pressure, flow rate, or any other metrics of interest. These properties show the state of the cryogenic fluid, and whether it is at ideal conditions or should be altered.

The cryogenic fluid is then flowed to a cutting tool in step 34, where it cools the cutting tool. The cryogenic fluid can either be applied to an external surface of the cutting tool through a nozzle, or it can be applied to one or more internal passages of the cutting tool. The cutting tool's lifespan is greatly increased by the cryogenic cooling.

While the cryogenic fluid is cooling the cutting tool, another sensor is monitoring the work of the cutting tool on a work piece. This sensor is an infrared (IR) sensor which monitors heat given off by both the cutting tool and the surface of the work piece. The data collected from the IR sensor can determine whether the flow of the cryogenic fluid is optimal for tool life, machining process parameters and for producing acceptable surface finish and metallurgy.

In step 36, data from the sensors is sent to a machining control unit. The machining control unit analyzes the data, which can include temperature, pressure, and flow rate information about the cryogenic fluid, and determines which conditions should be altered to optimize the cryogenic cooling, avoid early flash of cryogenic fluid to a gas, and allow for less waste of cryogenic fluid.

Finally, in step 38, the machining control unit communicates with the flow regulator to adjust the flow of cryogenic fluid into the machining system, if needed. The machining control unit can also adjust the cutting tool position and machining process parameters.

This feedback-controlled cryogenic machining system and method of using a feedback-controlled cryogenic machining system provide the user information regarding cryogenic fluid temperature, pressure and flow rate, all of which can be controlled by the feedback-controlled system. The system can make real-time adjustments based on the data it receives. This allows production yields which are better controlled and optimized, and provides real time data as machining processes are occurring.

Overall, this method results in an increased lifespan of the cutting tool by more effectively cooling it, improved quality control of the work piece product by determining when the cutting tool should be replaced, improved efficiency of cooling the cutting tool with cryogenic fluid by wasting less cryogenic coolant, and long term data collection and analysis for use in future machining processes.

## Claims

1. A cryogenic machining system (10) comprising:
a cryogenic fluid source (12);
a flow regulator (14) downstream of the cryogenic fluid source (12);
a machining control unit (18);
at least one sensor (16) downstream of the flow regulator (14), the at least one sensor (16) configured to assess cryogenic fluid and transmit first data to the machining control unit (18);
a cutting tool (20) downstream of the at least one sensor (16), wherein the cutting tool (20) is configured to work on a surface of a work piece (22); and
an infrared sensor (24) configured to assess the cutting tool (20) at the surface of the work piece (22) and communicate second data to the machine control unit (18);
wherein the machining control unit (18) is configured to control the flow regulator (14) in response to the first and second data and to control action and placement of the cutting tool (20).

2. The system (10) of claim 1 and further comprising a work piece (22), wherein the cutting tool (20) is configured to shape the work piece (22).

3. The system (10) of claim 1 or 2, wherein the at least one sensor (16) is configured to assess one or more of flow rate, pressure or temperature of the cryogenic fluid.

4. The system (10) of any preceding claim, wherein the at least one sensor (16) is configured to collect data relating to the cryogenic fluid.

5. The system (10) of any of claims 2 to 4, wherein the machining control unit (18) is configured to control movement and placement of the work piece (22).

6. The system (10) of any preceding claim, wherein the cutting tool (20) is internally cooled by the cryogenic fluid.

7. The system (10) of any preceding claim, wherein the cutting tool (20) is externally cooled by the cryogenic fluid.

8. A method (26) of regulating a cryogenically cooled machining system (10), the method (26) comprising:
flowing a cryogenic coolant through a flow regulator (14);
directing the cryogenic fluid through at least one sensor (16);
assessing at least one property of the cryogenic fluid with the at least one sensor (16);
cooling a cutting tool (20) with the cryogenic coolant, wherein the cutting tool (20) is configured to work on a surface of a work piece (22);
transmitting first data about the at least one property of the cryogenic fluid from the sensor (16) to a machining control unit (18) configured to control the flow regulator (14);
detecting infrared radiation near the cutting tool (20) by means of an infrared sensor (24) configured to assess the cutting tool (20) at the surface of the work piece (24) and communicate second data to the machine control unit (18);
adjusting at least one property of the cryogenic coolant based on the first and second data transmitted to the machining control unit (18); and
adjusting motion of the cutting tool (20) based on the first and second data transmitted to the machining control unit (18).

9. The method (26) of claim 8, wherein the at least one property is at least one of temperature, pressure and/or flow velocity.

10. The method (26) of any of claims 8 or 9, further comprising adjusting placement of a work piece (22) based on the data transmitted to the machining control unit (18).

## Patentansprüche

1. Kryogenes Werkzeugsystem (10), umfassend:
eine kryogene Fluidquelle (12);
einen Durchflussregler (14) stromabwärts der kryogenen Fluidquelle (12);
eine Bearbeitungssteuereinheit (18);
mindestens einen Sensor (16) stromabwärts des Durchflussreglers (14), wobei der mindestens eine Sensor (16) so konfiguriert ist, dass er kryogenes Fluid bewertet und erste Daten an die Bearbeitungssteuereinheit (18) überträgt;
ein Schneidwerkzeug (20) stromabwärts von dem mindestens einen Sensor (16), wobei das Schneidwerkzeug (20) so konfiguriert ist, dass es eine Fläche eines Werkstücks (22) bearbeitet; und
einen Infrarotsensor (24), der so konfiguriert ist, dass er das Schneidwerkzeug (20) an der Fläche des Werkstücks (22) bewertet und zweite Daten an die Bearbeitungssteuereinheit (18) übermittelt;
wobei die Bearbeitungssteuereinheit (18) so konfiguriert ist, dass sie den Durchflussregler (14) als Reaktion auf die ersten und zweiten Daten steuert und die Aktion und Platzierung des Schneidwerkzeugs (20) steuert.

2. System (10) nach Anspruch 1 und ferner umfassend ein Werkstück (22), wobei das Schneidwerkzeug (20) so konfiguriert ist, dass es das Werkstück (22) formt.

3. System (10) nach Anspruch 1 oder 2, wobei der mindestens eine Sensor (16) so konfiguriert ist, dass er eines oder mehrere von Durchflussrate, Druck oder Temperatur des kryogenen Fluids bewertet.

4. System (10) nach einem der vorhergehenden Ansprüche, wobei der mindestens eine Sensor (16) so konfiguriert ist, dass er Daten bezüglich des kryogenen Fluids sammelt.

5. System (10) nach einem der Ansprüche 2 bis 4, wobei die Bearbeitungssteuereinheit (18) so konfiguriert ist, dass sie die Bewegung und Platzierung des Werkstücks (22) steuert.

6. System (10) nach einem der vorhergehenden Ansprüche, wobei das Schneidwerkzeug (20) intern durch das kryogene Fluid gekühlt wird.

7. System (10) nach einem der vorhergehenden Ansprüche, wobei das Schneidwerkzeug (20) von außen durch das kryogene Fluid gekühlt wird.

8. Verfahren (26) zur Regelung eines kryogenisch gekühlten Bearbeitungssystems (10), wobei das Verfahren (26) umfasst:
Durchfließen eines kryogenen Kühlmittels durch einen Durchflussregler (14);
Leiten des kryogenen Fluids durch mindestens einen Sensor (16) ;
Bewerten mindestens einer Eigenschaft des kryogenen Fluids mit dem mindestens einen Sensor (16);
Kühlen eines Schneidwerkzeugs (20) mit dem kryogenen Kühlmittel, wobei das Schneidwerkzeug (20) so konfiguriert ist, dass es auf einer Fläche eines Werkstücks (22) arbeitet;
Übertragen erster Daten über mindestens eine Eigenschaft des kryogenen Fluids von dem Sensor (16) an eine Bearbeitungssteuereinheit (18), die so konfiguriert ist, dass sie den Durchflussregler (14) steuert;
Erfassen von Infrarotstrahlung in der Nähe des Schneidwerkzeugs (20) mittels eines Infrarotsensors (24), der so konfiguriert ist, dass er das Schneidwerkzeug (20) an der Fläche des Werkstücks (24) bewertet und zweite Daten an die Bearbeitungssteuereinheit (18) übermittelt;
Einstellen mindestens einer Eigenschaft des kryogenen Kühlmittels basierend auf den ersten und zweiten Daten, die an die Bearbeitungssteuereinheit (18) übertragen werden; und
Einstellen der Bewegung des Schneidwerkzeugs (20) basierend auf den ersten und zweiten Daten, die an die Bearbeitungssteuereinheit (18) übertragen werden.

9. Verfahren (26) nach Anspruch 8, wobei die mindestens eine Eigenschaft mindestens eines von Temperatur, Druck und/oder Durchflussgeschwindigkeit ist.

10. Verfahren (26) nach einem der Ansprüche 8 oder 9, ferner umfassend das Einstellen der Platzierung eines Werkstücks (22) basierend auf den Daten, die an die Bearbeitungssteuereinheit (18) übertragen werden.

## Revendications

1. Système d'usinage cryogénique (10) comprenant :
une source de fluide cryogénique (12) ;
un régulateur de débit (14) en aval de la source de fluide cryogénique (12) ;
une unité de commande d'usinage (18) ;
au moins un capteur (16) en aval du régulateur de débit (14), l'au moins un capteur (16) étant configuré pour évaluer le fluide cryogénique et transmettre des premières données à l'unité de commande d'usinage (18) ;
un outil de coupe (20) en aval de l'au moins un capteur (16), dans lequel l'outil de coupe (20) est configuré pour travailler sur une surface d'une pièce à usiner (22) ; et
un capteur infrarouge (24) configuré pour évaluer l'outil de coupe (20) au niveau de la surface de la pièce à usiner (22) et communiquer des secondes données à l'unité de commande de machine (18) ;
dans lequel l'unité de commande d'usinage (18) est configurée pour commander le régulateur de débit (14) en réponse aux premières et secondes données et pour commander l'action et le placement de l'outil de coupe (20) .

2. Système (10) selon la revendication 1 et comprenant en outre une pièce à usiner (22), dans lequel l'outil de coupe (20) est configuré pour façonner la pièce à usiner (22).

3. Système (10) selon la revendication 1 ou 2, dans lequel l'au moins un capteur (16) est configuré pour évaluer un ou plusieurs parmi le débit, la pression ou la température du fluide cryogénique.

4. Système (10) selon une quelconque revendication précédente, dans lequel l'au moins un capteur (16) est configuré pour collecter des données relatives au fluide cryogénique.

5. Système (10) selon l'une quelconque des revendications 2 à 4, dans lequel l'unité de commande d'usinage (18) est configurée pour commander le mouvement et le placement de la pièce à usiner (22) .

6. Système (10) selon une quelconque revendication précédente, dans lequel l'outil de coupe (20) est refroidi intérieurement par le fluide cryogénique.

7. Système (10) selon une quelconque revendication précédente, dans lequel l'outil de coupe (20) est refroidi extérieurement par le fluide cryogénique.

8. Procédé (26) de régulation d'un système d'usinage refroidi par cryogénie (10), le procédé (26) comprenant :
la circulation d'un réfrigérant cryogénique à travers un régulateur de débit (14) ;
l'orientation du fluide cryogénique à travers au moins un capteur (16) ;
l'évaluation d'au moins une propriété du fluide cryogénique avec l'au moins un capteur (16) ;
le refroidissement d'un outil de coupe (20) avec le réfrigérant cryogénique, dans lequel l'outil de coupe (20) est configuré pour travailler sur une surface d'une pièce à usiner (22) ;
la transmission de premières données concernant l'au moins une propriété du fluide cryogénique depuis le capteur (16) à une unité de commande d'usinage (18) configurée pour commander le régulateur de débit (14) ;
la détection d'un rayonnement infrarouge à proximité de l'outil de coupe (20) au moyen d'un capteur infrarouge (24) configuré pour évaluer l'outil de coupe (20) au niveau de la surface de la pièce à usiner (24) et communiquer des secondes données à l'unité de commande de machine (18) ;
le réglage d'au moins une propriété du réfrigérant cryogénique sur la base des premières et secondes données transmises à l'unité de commande d'usinage (18) ; et
le réglage du mouvement de l'outil de coupe (20) sur la base des premières et secondes données transmises à l'unité de commande d'usinage (18).

9. Procédé (26) selon la revendication 8, dans lequel l'au moins une propriété est au moins l'une parmi la température, la pression et/ou la vitesse d'écoulement.

10. Procédé (26) selon l'une quelconque des revendications 8 ou 9, comprenant en outre le réglage du placement d'une pièce à usiner (22) sur la base des données transmises à l'unité de commande d'usinage (18).
